# EUROPEAN PATENT APPLICATION

(11) **EP 4 672 091 A1**
(43) Date of publication of application: **31.12.2025**
(21) Application number: 25183243.2
(22) Date of filing: 17.06.2025
(51) Int. Cl.: G06N 3/08, G06N 3/063

(54) **COMPUTATIONAL STORAGE SYSTEM, OPERATING METHOD THEREOF, AND ELECTRONIC DEVICE**

(30) Priority: 25.06.2024 KR 20240083031
(71) Applicant: Samsung Electronics Co., Ltd., Suwon-si, Gyeonggi-do 16677 (KR)
(72) Inventor: JI, Sooyoung, 16677 Suwon-si, Gyeonggi-do (KR)
(74) Representative: Kuhnen & Wacker Patent- und Rechtsanwaltsbüro PartG mbB

(57) **Abstract**

An example computational storage system includes a storage device (210) and a computing device (220). The computing device (220) is configured to generate first inference multimedia data corresponding to original multimedia data based on base data, an event table, and at least one neural network model, where the base data includes base raw data of at least one object included in the original multimedia data, and the event table includes data obtained based on respectively mapping events occurred in the base data and occurrence times of the events.

## Description

### BACKGROUND

In an electronic device including a storage device and a host device, instructions (or programs) and data are stored in the storage device, and the instructions and the data need to be transmitted from the storage device to the host device to perform data processing based on the instructions. Accordingly, even if a processing speed of the host device increases, a data transmission speed between the host device and the storage device may act as an obstacle to performance improvement, which may limit the throughput of the entire system. To solve this problem, computational storage systems including configurations of the storage device of the related art and a computing device capable of processing data have been studied. Various multimedia data may be generated as a result of processing data in the computing device due to a request from a host device. Because multimedia data is generally high-capacity data, the multimedia data requires a lot of data storage space when stored in the storage device. At this time, when the storage space in which the multimedia data is stored in the storage device is not efficiently managed, the performance of the entire electronic device including a computational storage system may deteriorate due to the lack of storage space. Therefore, efficiently managing a storage space of a storage device when storing multimedia data is desired.

### SUMMARY

The present disclosure relates to a computational storage system for efficiently managing a storage space in which multimedia data is stored in a storage device based on at least one neural network model, an operating method of the computational storage system, and an electronic device.

The technical problems of the present disclosure are not limited to the technical problems mentioned above, and other technical problems not mentioned will be clearly understood by those of ordinary skill in the art from the following descriptions.

In some implementations, a computational storage system includes a storage device configured to store at least one neural network model, base data corresponding to the at least one neural network model, and an event table, and a computing device configured to generate first inference multimedia data (e.g., video data) corresponding to original multimedia data (e.g., video data) based on the base data and the event table by using the at least one neural network model, wherein the base data is or includes base raw data of at least one object included in the original multimedia data, and the event table includes data obtained by respectively mapping events that occurred in the base data and occurrence times of the events.

In some implementations, an operating method of a computational storage system includes generating base data, and an event table from original multimedia data (e.g, video data), generating at least one neural network model based on the base data and the event table, and generating first inference multimedia data (e.g., video data) corresponding to the original multimedia data based on the base data and the event table by using the at least one neural network model, wherein the base data is or includes base raw data of at least one object included in the original multimedia data, and the event table includes data obtained by respectively mapping events that occurred in the base data and occurrence times of the events.

In some implementations, an electronic device includes a memory, and a processor configured to generate base data, and an event table from original multimedia data (e.g., video data), generate at least one neural network model based on the base data and the event table, generate first inference multimedia data (e.g. video data) for inferring the original multimedia data by using the at least one neural network model, calculate a first matching rate between the original multimedia data and the first inference multimedia data, and when the first matching rate is greater than or equal to a threshold, store the base data, the event table, and the at least one neural network model in the memory in place of the original multimedia data, wherein the base data is or includes base raw data of at least one object included in the original multimedia data, and the event table includes data obtained by respectively mapping events that occurred in the base data and occurrence times of the events.

### BRIEF DESCRIPTION OF THE DRAWINGS

Implementations will be more clearly understood from the following detailed description taken in conjunction with the accompanying drawings.
FIG. 1 is a block diagram illustrating an example of an electronic device.
FIG. 2 is a block diagram illustrating an example of a computational storage system.
FIG. 3A is a diagram for explaining an example of an operation of a computational storage system.
FIG. 3B is a diagram for describing an example of an operation of a computational storage system.
FIG. 4 is a diagram for describing an example of an operation of a computational storage system.
FIG. 5A is a diagram for describing an example of an operation of a computational storage system.
FIG. 5B illustrates an example of an event table of a computational storage system.
FIG. 6 is a diagram for describing an example of an operation of a computational storage system.
FIG. 7A is a diagram for describing an example of an operation of a computational storage system.
FIG. 7B is a diagram for describing an example of an operation of a computational storage system.
FIG. 8 illustrates an example of the effect of storage space management of a computational storage system.
FIG. 9 is a flowchart illustrating an example of an operating method of a computational storage system.
FIG. 10 is a flowchart illustrating an example of an operating method of a computational storage system.
FIG. 11 is a block diagram illustrating an example of an electronic device.

### DETAILED DESCRIPTION

Hereinafter, implementations of the present disclosure will be described in detail with reference to the accompanying drawings. Although implementations of the present disclosure are illustrated in the drawings and described in detail, this is not intended to limit various implementations to a specific form. For example, it is obvious to those of ordinary skill in the art to which the present disclosure belongs that the implementations of the present disclosure may be changed in various ways.

Herein, the meaning of generating a neural network model based on base data and an event table may mean training a neural network model based on the base data and the event table.

Herein, a computational storage system 200 may generate inference video data based on base data and an event table by using at least one neural network model in response to receiving a request from a host device 100 or inputting (or generating) the original video data to the computational storage system 200.

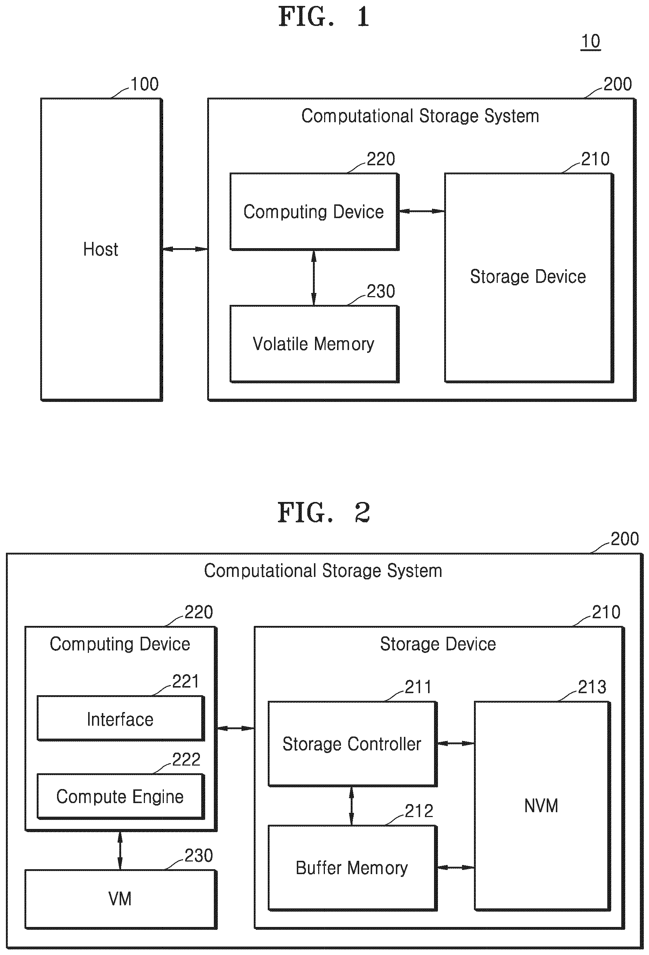

FIG. 1 is a block diagram illustrating an example of an electronic device 10.

Referring to FIG. 1, the electronic device 10 may include the host device 100 and the computational storage system 200.

The electronic device 10 may be a personal computer (PC), a data server, an Ultra Mobile PC (UMPC), a workstation, a netbook, a network-attached storage (NAS), a smart television, an Internet of Things (IoT) device, or a portable electronic device. The portable electronic device may be a laptop computer, a mobile phone, a smartphone, a tablet PC, a personal digital assistant (PDA), an enterprise digital assistant (EDA), a digital still camera, a digital video camera, an audio device, a portable multimedia player (PMP), a personal navigation device (PND), an MP3 player, a handheld game console, an e-book, or a wearable device.

The host device 100 may manage an overall operation of the electronic device 10. The host device 100 may store data in the computational storage system 200 and read data from the computational storage system 200. For example, the host device 100 may store a write request and write data in the computational storage system 200, or may transmit a read request to the computational storage system 200. In addition, the host device 100 may allocate a task and data to the computational storage system 200, and control the computational storage system 200 to perform the task. For example, the host device 100 may transmit a data processing request for performing the task together with data to be processed in the computational storage system 200, or transmit a data processing request for data pre-stored in the computational storage system 200 to the computational storage system 200.

In some implementations, the host device 100 may transmit an inference video generation request to the computational storage system 200. The inference video generation request may be a request for a computing device 220 included in the computational storage system 200 to generate inference video data corresponding to the original video data and store the inference video data in the storage device 210. Such an inference video generation request may be transmitted from the host device 100 to the computational storage system 200 according to a corresponding function selection/request of a user.

The host device 100 may be implemented as a central processing unit (CPU), a processor, a microprocessor, an application processor (AP), or a system-on-a-chip (SoC).

The computational storage system 200 may include a storage device 210, the computing device 220, and a volatile memory (VM) 230. The computational storage system 200 may be referred to as a computational storage device. The computational storage system 200 may store or process data in response to a request from the host device 100. In some implementations, the computational storage system 200 may be implemented as a storage acceleration platform that accelerates data processing by storing and processing data internally. For example, the computational storage system 200 may be a smart solid state drive (SSD).

The storage device 210 may store data provided from the host device 100. In some implementations, the storage device 210 may store base data, an event table, and a neural network model generated by the computing device 220. In addition, in some implementations, the storage device 210 may store the original video data (or at least part of the original video data) and the inference video data (or at least part of the inference video data) generated by the computing device 220. The detailed configuration and operation of the storage device 210 will be described in more detail with reference to FIG. 2.

The computing device 220, which is a device that performs data processing on data to be received, may perform data processing in response to a data processing request received from the host device 100. For example, the computing device 220 may perform data processing on input data by driving an application. The application may include a plurality of data computations related to performing a task, for example, an arithmetic computation, a convolution computation, a polling computation, etc. For example, when the computing device 220 performs a neural network-based task, the application may include a neural network model. The neural network model may include a plurality of data computations, and input and output sizes, weights, and biases of the plurality of data computations, based on at least one of a Convolution Neural Network (CNN), a Region with Convolution Neural Network (RCNN), a Region Proposition Network (RPN), a Recurrent Neural Network (RNN), a stacking-based deep neural network (S-DNN), an State-Space Dynamic Neural Network (S-SDNN), a Deconvolution Network, a Deep Belief Network (DBN), an Restricted Boltzman Machine (RBM), a Fully Convolutional Network, a Long Short-Term Memory (LSTM), a Classification Network, or various types of neural networks. For example, the neural network model may be a deep-fake model as a generative model.

For example, the computing device 220 may be implemented as a Graphic Processing Unit (GPU), a Digital Signal Processor (DSP), a Field Programmable Gate Array (FPGA), an Application Specific Integrated Circuit (ASIC), or a Neural Processing Unit (NPU). However, the computing device 220 is not limited thereto, and may be implemented as a variety of types of acceleration circuits (accelerators) that perform in parallel data processing required to perform an allocated task, for example, data computations.

In some implementations, the computing device 220 may generate the inference video data corresponding to the original video data based on base data and an event table by using a neural network model in response to the inference video generation request (or input of the original video data to the computational storage system 200) received from the host device 100. For example, the computing device 220 may generate at least one inference video data for each region corresponding to each neural network model by using at least one neural network model for each region or generate at least one inference video data for each section corresponding to each neural network model by using at least one neural network model for each section. The detailed configuration and operation of the computing device 220 will be described in more detail with reference to FIG. 2.

The VM 230 may store data used for data processing of the computing device 220. The VM 230 may store data generated by the computing device 220 or data generated as a result of data processing. At this time, when the computing device 220 performs data processing based on data stored in the storage device 210, data stored in the storage device 210 (e.g., the base data, the event table, the neural network model, etc.) may be read and stored in the VM 230.

The VM 230 may be implemented as a volatile memory such as a dynamic random access memory (DRAM) or a static RAM (SRAM).

According to the computational storage system 200, an operating method thereof, and the electronic device 10 according to some implementations, by generating and storing a neural network model in at least one region or at least one section of multimedia data, it is possible to store the multimedia data by using less storage space than storing the original media data (e.g., the original video data).

Furthermore, by using less storage space when storing the multimedia data, the storage space may be managed in the storage device by maximizing the efficiency of the storage space.

FIG. 2 is a block diagram illustrating an example of the computational storage system 200.

Referring to FIG. 2, the computational storage system 200 may include the storage device 210, the computing device 220, and the VM 230.

The computing device 220 may include an interface 221 and a compute engine 222.

The interface 221 may manage transmission of requests or data between the host device 100 and the compute engine 222 inside the computing device 220 within the computational storage system 200. In addition, the interface 221 manage transmission of requests or data between the host device 100 and the storage device 210 within the computational storage system 200.

The interface 221 may receive a data processing request and an inference video generation request from the host device 100. The data processing request may be a request for the computing device 220 to perform data processing on data pre-stored in the storage device 210 or data processing on data received from the host device 100. When the interface 221 receives the data processing request from the host device 100, the interface 221 may transmit the data processing request to the compute engine 222. Accordingly, data processing corresponding to the data processing request may be performed through the compute engine 222 of the computing device 220.

In some implementations, the interface 221 may receive the inference video generation request from the host device 100. The inference video generation request may be a request for the computing device 220 to generate inference video data corresponding to the original video data by using a neural network model and store the inference video data in the storage device 210. When the interface 221 receives the inference video generation request from the host device 100, the interface 221 may transmit the inference video generation request to the compute engine 222. Accordingly, the inference video data may be generated based on base data and an event table through the compute engine 222 of the computing device 220.

In some implementations, the computational storage system 200 may generate the inference video data based on the base data and the event table through the compute engine 222 when the original video data is input to the computational storage system 200 (or the original video data is generated) (even when the inference video generation request is not received from the host device 100). That is, the compute engine 222 of the computing device 220 may generate the inference video data by using the neural network model for each region (or for each section) in response to inputting the original video data to the computational storage system 200 (or generating the original video data).

In some implementations, the compute engine 222 of the computing device 220 may adjust a generation speed of the inference video data according to the performance of the compute engine 222. For example, the compute engine 222 may slowly generate the inference video data as a background process according to the performance of the compute engine 222. For another example, the compute engine 222 may quickly generate the inference video data in real-time in response to reception of the inference video generation request (or input of the original video data) from the host device 100 according to the performance of the compute engine 222.

In some implementations, the interface 221 may receive a neural network model read request from the host device 100. The neural network model read request may be a request for reading a neural network model stored in the storage device 210. When the interface 221 receives the neural network model read request from the host device 100, the interface 221 may transmit the neural network model read request to the storage device 210. Accordingly, the neural network model may be read from a non-volatile memory (NVM) 213 of the storage device 210 and transmitted to the host device 100.

The compute engine 222 may perform data processing in response to a data processing request. The compute engine 222 may perform data processing on data pre-stored in the storage device 210 or data processing on data received from the host device 100 in response to the data processing request. The compute engine 222 may store a value calculated in a data processing process in an internal register. In addition, the compute engine 222 may store data generated during the data processing process and data generated as a result of data processing in the VM 230. The compute engine 222 may store the data generated as a result of data processing in the storage device 210 through the interface 221.

In some implementations, the compute engine 222 may generate a neural network model that generates the inference video data based on the base data and the event table. For example, the compute engine 222 may generate at least one neural network model corresponding to each of at least one region included in the original video data. As another example, the compute engine 222 may generate at least one neural network model corresponding to each of at least one section included in the original video data.

In some implementations, the compute engine 222 may identify whether a plurality of pre-generated existing neural network models include an existing neural network model generated based on base data similar to the base data, and, when the plurality of pre-generated existing neural network models include the existing neural network model generated based on the similar base data, generate the inference video data by using the existing neural network model (without generating a new neural network model).

In some implementations, the compute engine 222 may generate the inference video data based on the base data and the event table by using the neural network model in response to the inference video generation request.

The inference video data may be video data generated based on features of the original video data for each region or for each section by the compute engine 222 (or the neural network model). That is, the compute engine 222 may generate the inference video data by using the neural network model in response to the inference video generation request, and, when a matching rate between the original video data and the inference video data is greater than or equal to a predetermined threshold, store the base data, the event table, and the neural network model in place of storing the original video data.

In some implementations, the compute engine 222 may divide the original video data into at least one region based on whether a data size of the event table in the original video data increases to more than a predetermined first threshold.

In some implementations, the compute engine 222 may divide the original video data into at least one section based on whether the data size of the event table in the original video data increases to more than the predetermined first threshold.

In some implementations, the compute engine 222 may generate at least one inference video data for each region corresponding to each neural network model by using at least one neural network model for each region.

In some implementations, the compute engine 222 may generate at least one inference video data for each section corresponding to each neural network model by using at least one neural network model for each section.

In some implementations, the compute engine 222 may generate the inference video data and then, when the matching rate between the original video data and the inference video data is greater than or equal to a predetermined second threshold, generate a storage request for the base data, the event table, and the neural network model which are the basis for the generation of the inference video data from a storage controller 211 by using a shared access protocol.

In some implementations, the compute engine 222 may generate inference video data and then, when the matching rate between the original video data and the inference video data is less than the predetermined second threshold, regenerate a neural network model based on the base data and the event table. The compute engine 222 may regenerate the inference video data by using the regenerated neural network model. When a matching rate between the original video data and the regenerated inference video data is greater than or equal to the predetermined second threshold, the compute engine 222 may generate the storage request for the base data, the event table, and the neural network model which are the basis for the generation of the inference video data from the storage controller 211 by using the shared access protocol (at this time, the original video data may be deleted). When the matching rate between the original video data and the regenerated inference video data is less than the predetermined second threshold, and the matching rate increases to less than a predetermined third threshold, the compute engine 222 may generate the storage request for the original video data from the storage controller 211 by using the shared access protocol (at this time, the base data, the event table, and the neural network model may be deleted).

In some implementations, the compute engine 222 may generate the inference video data and then, when the matching rate between the original video data and the inference video data is less than the predetermined second threshold (and when the matching rate increases to less than the predetermined third threshold), generate the storage request for the original video data from the storage controller 211 by using the shared access protocol.

The storage request for the base data, the event table, and the neural network model or the storage request for the original video data generated by the compute engine 222 may be transmitted to the storage device 210 through the interface 221.

The storage device 210 may include the storage controller 211, a buffer memory 212, and a non-volatile memory (NVM) 213.

The storage controller 211 may manage an overall operation of the storage device 210, and may control the NVM 213 to perform an operation according to a request received from the host device 100. For example, the storage controller 211 may control the NVM 213 to write data to or read data from the NVM 213 in response to a write or read request from the host device 100, and may control an erase operation of the NVM 213. In addition, the storage controller 211 may manage main operations of the NVM 213 such as garbage collection, bad block management, read reclaim, or read substitution, and manage power of the NVM 213.

The buffer memory 212 may operate as a buffer temporarily storing data in the storage device 210. The buffer memory 212 may store data received from the host device 100 or read from the NVM 213. In addition, the buffer memory 212 may store data generated by the computing device 220.

The buffer memory 212 may be implemented as a volatile memory such as a DRAM or an SRAM. However, the buffer memory 212 is not limited thereto, and may be implemented as a variety of types of non-volatile memories such as a resistive nonvolatile memory such as a magnetic RAM (MRAM), a phase change RAM (PRAM), or a resistive RAM (ReRAM), a flash memory, a nano floating gate memory (NFGM), a polymer random access memory (PoRAM), or a ferroelectric random access memory (FRAM). In some implementations, the buffer memory 212 is provided outside the storage controller 211, but is not limited thereto, and the buffer memory 212 may be provided inside the storage controller 211.

The NVM 213 may store data. The NVM 213 may store data provided from the host device 100 or data provided from the computing device 220. The NVM 213 may include a memory cell array including nonvolatile memory cells capable of maintaining stored data even when the power of the storage device 210 is interrupted, and the memory cell array may be divided into a plurality of memory blocks. The plurality of memory blocks may have a two-dimensional (2D) horizontal structure in which memory cells are 2D disposed on the same plane (or layer), or a three-dimensional (3D) vertical structure in which non-volatile memory cells are 3D disposed. A memory cell may be a single level cell (SLC) storing one bit of data or a multi level cell (MLC) storing two or more bits of data. However, the present disclosure is not limited thereto, and each memory cell may be a triple level cell (TLC) storing 3-bit data or a quadruple level cell storing 4-bit data.

In some implementations, the NVM 213 may include a plurality of dies or a plurality of chips each including a memory cell array (MCA). For example, the NVM 213 may include a plurality of chips, and each of the chips may include a plurality of dies. In some implementations, the NVM 213 may also include a plurality of channels each including a plurality of chips.

In some implementations, the NVM 213 may be a NAND flash memory device. However, the present disclosure is not limited thereto, and NVM 213 may be implemented as a resistive memory device such as a ReRAM, a PRAM, and a MRAM.

In some implementations, the storage controller 211 may receive a storage request for the base data, the event table, and the neural network model, the base data, the event table, and the neural network model from the interface 221 of the computing device 220 by using the access protocol. The storage controller 211 may store the base data, the event table, and the neural network model in the NVM 213 in response to the storage request of the base data, the event table, and the neural network model received from the computing device 220 by using the access protocol.

In some implementations, the storage controller 211 may receive a storage request for the original video data and the original video data from the interface 221 of the computing device 220 by using the access protocol. The storage controller 211 may store the original video data in the NVM 213 in response to the storage request for the original video data from the interface 221 of the computing device 220 by using the access protocol.

In some implementations, the storage controller 211 may receive a dump read request transmitted through the interface 221 of the computing device 220 from the host device 100. For example, the storage controller 211 may read a neural network model that is a target of a neural network model read request in response to the neural network model read request. For example, the storage controller 211 may read the base data and the event table that are targets of the neural network model read request in response to a base data and event table read request. For example, the storage controller 211 may read the original video data that is a target of an original video data read request in response to the original video data read request.

As described above, when the computational storage system 200 is used, the computing device 220 may generate the inference video data corresponding to the original video data by using the base data and the event table using the neural network model. Therefore, the computational storage system 200 may store the neural network model, the base data, and the event table which have relatively small data size in place of the original video data having a large data size, thereby maximizing the utilization of the storage space in the storage device 210 and enabling efficient management.

In some implementations, in the descriptions of FIGS. 1 and 2 described above, some operations (or some configurations) of the computational storage system 200 may be implemented as operations (or configurations) of the host device 100. For example, in some implementations, the host device 100 may generate the base data and the event table corresponding thereto from the original video data by receiving a request from a user or in response to generating the original video data. In some implementations, the host device 100 may divide the original video data into at least one region based on whether the data size of the event table in the original video data increases to more than the predetermined first threshold. The host device 100 may generate at least one neural network model for each region based on at least base data one for each region and an event table. In some implementations, the host device 100 may divide the original video data into at least one section based on whether the data size of the event table in the original video data increases to more than the predetermined first threshold. The host device 100 may generate at least one neural network model for each section based on at least one base data for each section and an event table. In some implementations, the host device 100 may store the generated base data, event table, and neural network model. In some implementations, when a user request is received or the original video data is input to the computational storage system 200, the computational storage system 200 may receive base data for each region, an event table, and a neural network model (or a base data for each section, an event table, and a neural network model) from the host device 100, and the computational storage system 200 may generate inference video data for each region (or for each section) based on the received base data, event table, and neural network model.

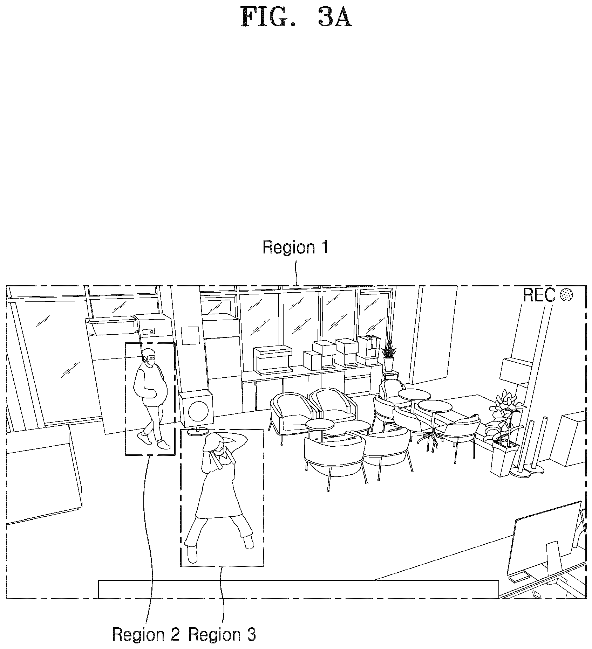

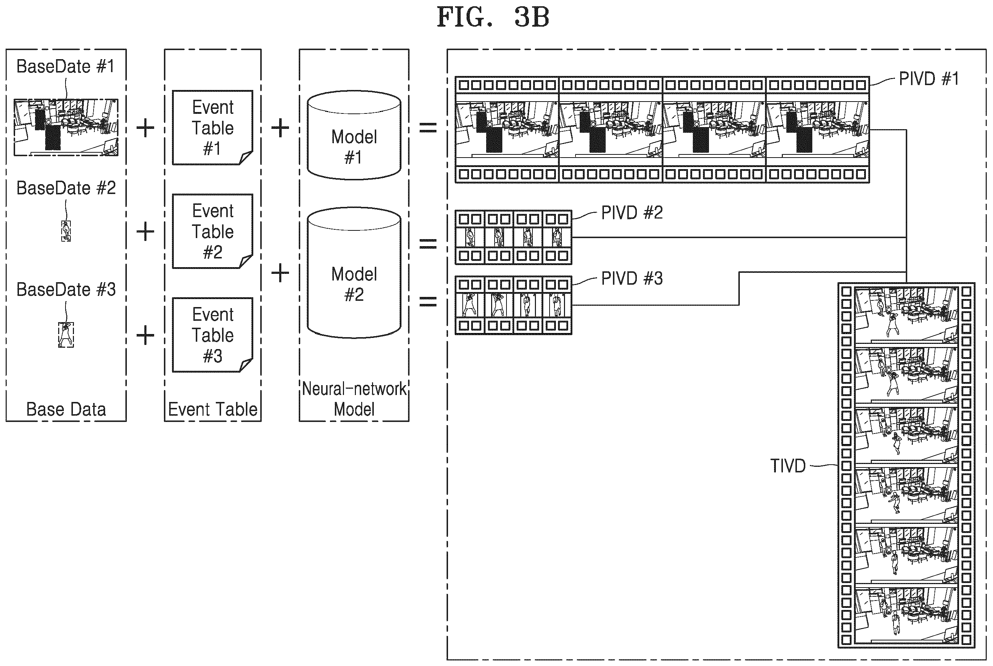

FIG. 3A is a diagram for explaining an example of an operation of the computing device 220. FIG. 3B is a diagram for describing an example of an operation of the computing device 220.

In detail, FIGS. 3A and 3B are diagrams for explaining the operation of the computational storage system 200 that generates inference video data by generating at least one neural network model for each region included in the original video data (e.g., CCTV recorded video data).

Referring to FIGS. 3A and 3B, in some implementations, the computing device 220 of the computational storage system 200 may generate base data (e.g., first base data #1, second base data #2, and third base data #3) and event tables (e.g., first event table #1, second event table #2, and third event table #3) from the original video data. Here, the base data, which is data that is the basis when the neural network model generates inference video data, may mean base raw data (e.g., base video data of an object (1 picture)) of at least one object included in the original video data. The event tables may mean data obtained by respectively mapping events (e.g., movement of an object, an operation change, etc.) occurring in the base data and occurrence times of the events. The base data and the event tables may be in a one-to-one correspondence relationship, but are not limited thereto.

Referring to FIG. 3A, in some implementations, the computing device 220 may divide the original video data into at least one region based on whether a data size of the event table increases to more than a first threshold (e.g., 200 %). For example, when it is assumed that the data size of the event table increases to more than the first threshold (e.g., 200 %) in a second region 2 and a third region 3 in the original video data, the computing device 220 may divide the original video data into a first region 1, the second region 2, and the third region 3.

Referring to FIG. 3B, in some implementations, the computing device 220 may generate at least one neural network model corresponding to each of at least one region based on the base data and the event table. For example, the computing device 220 may generate a first neural network model #1 corresponding to the first region 1 based on the first base data #1 and the first event table #1 in the first region 1.

In some implementations, when contents of events occurring in base data of a plurality of regions are similar, the computing device 220 may generate one neural network model corresponding to the plurality of regions based on the base data of the plurality of regions and event tables of the plurality of regions. For example, when event contents (e.g., movements of person 1 and person 2) occurring in the base data (e.g., base data of person 1 and person 2) of the second region 2 and the third region 3 are similar, the computing device 220 may generate a second neural network model #2 corresponding to the second region 2 and the third region 3 based on the second base data #2 of the second region 2, the second event table #2, the third base data #3 of the third region 3, and the third event table #3.

In some implementations, the computing device 220 may generate partial inference video data (PIVD) based on at least one base data for each region and an event table by using a neural network model. For example, the computing device 220 may generate first PIVD #1 based on the first base data #1 and the first event table #1 of the first region 1 by using the first neural network model #1. For example, the computing device 220 may generate second PIVD #2 based on the second base data #2 and the second event table #2 of the second region 2 by using the second neural network model #2. For example, the computing device 220 may generate third PIVD #3 based on the third base data #3 and the third event table #3 of the third region 3 by using the second neural network model #2.

In some implementations, the computing device 220 may generate total inference video data (TIVD) by synthesizing the generated PIVD. For example, the computing device 220 may generate the TIVD by synthesizing the first PIVD #1, the second PIVD #2, and the PIVD #3.

The computational storage system 200 (or the computing device 220) may not store the entire original video data (store high-capacity data), but may store only base data for each region and event tables including events occurring in the base data (store low-capacity data). When a request is received from a host device in the future, the computational storage system 200 (or the computing device 220) may generate inference video data (almost matching the content of the original video data) based on the base data for each region and the event tables to provide the generated inference video data to the user.

As described above, the computational storage system 200 (or the computing device 220) may generate and store at least one neural network model for each region (and base data and event tables of the corresponding region) (low capacity) included in the original video data, instead of storing high-capacity original video data, thereby maximizing the efficiency of the storage space in the storage device 210.

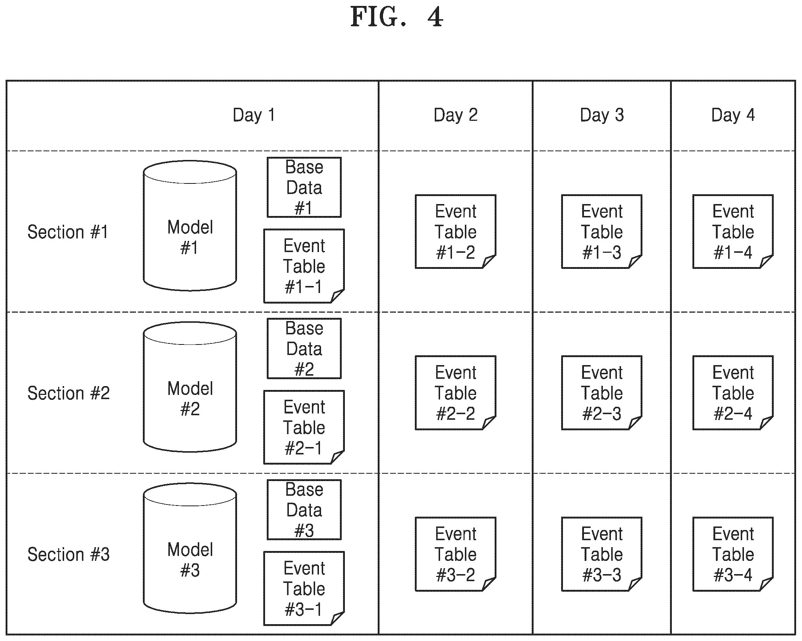

FIG. 4 is a diagram for describing an example of an operation of the computational storage system 200.

In detail, FIG. 4 is a diagram for explaining the operation of the computational storage system 200 that generates inference video data by generating at least one neural network model for each section included in the original video data (e.g., vehicle black box recorded video data).

In FIG. 4, it is assumed that a first section 1 is a straight driving section, a second section 2 is a corner driving section, and a third section 3 is an intersection driving section. However, an implementation is not limited thereto and may include various driving sections.

Referring to FIG. 4, in some implementations, the computing device 220 of the computational storage system 200 may generate base data (e.g., the first base data #1, the second base data #2, and the third base data #3), and event tables (e.g., a first event table #1-1, a second event table #2-1, and a third event table #3-1) of a day 1 from the original video data. Here, the base data, which is data that is the basis when the neural network model generates inference video data, may mean base raw data (e.g., base video data of an object (1 picture)) of at least one object included in the original video data. The event tables may mean data obtained by respectively mapping events (e.g., movement of an object, an operation change, etc.) that occurred in the base data and occurrence times of the events. The base data and the event tables may be in a one-to-one correspondence relationship, but are not limited thereto.

In some implementations, the computing device 220 may divide the original video data into at least one section based on whether a data size of the event table increases to more than a first threshold (e.g., 20 0%). For example, when it is assumed that the data size of the event table increases to more than the first threshold (e.g., 200 %) in the first section 1, the second section 2, and the third section 3 in the original video data, the computing device 220 may divide the original video data into the first region 1, the second region 2, and the third region 3.

In some implementations, the computing device 220 may generate at least one neural network model corresponding to each of at least one section based on the base data and the event table. For example, the computing device 220 may generate the first neural network model #1 corresponding to the first section 1 based on the first base data #1 and the first event table #1-1 of day 1 in the first section 1. For example, the computing device 220 may generate the second neural network model #2 corresponding to the second section 2 based on the second base data #2 and the second event table #2-1 of day 1 in the second section 2. For example, the computing device 220 may generate the third neural network model #3 corresponding to the third section 3 based on the third base data #3 and the third event table #3-1 of day 1 in the third section 3.

In some implementations, the computing device 220 may generate an event table related to each base data for each day. For example, the computing device 220 may generate a first event table #1-2 of day 2 related to the first base data #1 of the first section 1 in day 2, generate a first event table #1-3 of day 3 related to the first base data #1 in day 3, and generate a first event table #1-4 of day 4 related to the first base data #1 in day 4. For example, the computing device 220 may generate a second event table #2-2 of day 2 related to the second base data #2 of the second section 2 in day 2, generate a second event table #2-3 of day 3 related to the second base data #2 in day 3, and generate a second event table #2-4 of day 4 related to the second base data #2 in day 4. For example, the computing device 220 may generate a third event table #3-2 of day 2 related to the third base data #3 of the third section 3 in day 2, generate a third event table #3-3 of day 3 related to the third base data #3 in day 3, and generate a third event table #3-4 of day 4 related to the third base data #3 in day 4.

In some implementations, the computing device 220 may generate inference video data based on the base data and the event tables by using a neural network model for each section. In some implementations, the computing device 220 may generate the inference video data for each day based on the base data and the event tables generated for each day by using the neural network model for each section. For example, the computing device 220 may generate inference video data day 1 of a first section (e.g., the straight driving section) in day 1 based on the first base data #1 and the first event table #1-1 of day 1 by using the first neural network model #1, generate inference video data day 2 of the first section in day 2 based on the first base data #1 and the first event table #1-2 of day 2 by using the first neural network model #1, generate inference video data day 3 of the first section in day 3 based on the first base data #1 and the first event table #1-3 of day 3 by using the first neural network model #1, and generate inference video data day 4 of the first section in day 4 based on the first base data #1 and the first event table #1-4 of day 4 by using the first neural network model #1. For example, the computing device 220 may generate inference video data day 1 of a second section (e.g., the corner driving section) in day 1 based on the second base data #2 and the second event table #2-1 of day 1 by using the second neural network model #2, generate inference video data day 2 of the second section in day 2 based on the second base data #2 and the second event table #2-2 of day 2 by using the second neural network model #2, generate inference video data day 3 of the second section in day 3 based on the second base data #2 and the second event table #2-3 of day 3 by using the second neural network model #2, and generate inference video data day 4 of the second section in day 4 based on the second base data #2 and the second event table #2-4 of day 4 by using the second neural network model #2. For example, the computing device 220 may generate inference video data day 1 of a third section (e.g., the intersection driving section) in day 1 based on the third base data #3 and the third event table #3-1 of day 1 by using the third neural network model #3, generate inference video data day 2 of the third section in day 2 based on the third base data #3 and the third event table #3-2 of day 2 by using the third neural network model #3, generate inference video data day 3 of the third section in day 3 based on the third base data #3 and the third event table #3-3 of day 3 by using the third neural network model #3, and generate inference video data day 4 of the third section in day 4 based on the third base data #3 and the third event table #3-4 of day 4 by using the third neural network model #3.

The computational storage system 200 (or the computing device 220) may not store the entire original video data (store high-capacity data) of day 1 to day 4, but may store only base data for each section and event tables including events occurring in the base data (store low-capacity data) for day 1 to day 4. When the original video data is later requested from the host device or input to the computational storage system 200, the computational storage system 200 (or the computing device 220) may generate inference video data (almost identical to the content of the original video data) based on base data for each region and an event table to provide the generated inference video data to the user.

As described above, the computational storage system 200 (or computing device 220) may generate and store at least one neural network model for each section (and the base data and the event tables of the corresponding section - corresponding to the neural network model) (low capacity) included in the original video data, instead of repeatedly storing the high-capacity original video data (e.g., day 1 to day 4) for each day, thereby maximizing the efficiency of the storage space in the storage device 210.

For convenience of explanation, FIG. 4 illustrates that a neural network model corresponding to each of at least one section is generated, but is not limited thereto, and the computing device 220 may generate one neural network model corresponding to a plurality of regions based on base data of the plurality of regions and event tables of the plurality of regions when contents of events occurring in base data of a plurality of sections are similar (e.g. a straight section and another straight section, or a corner section and another corner section).

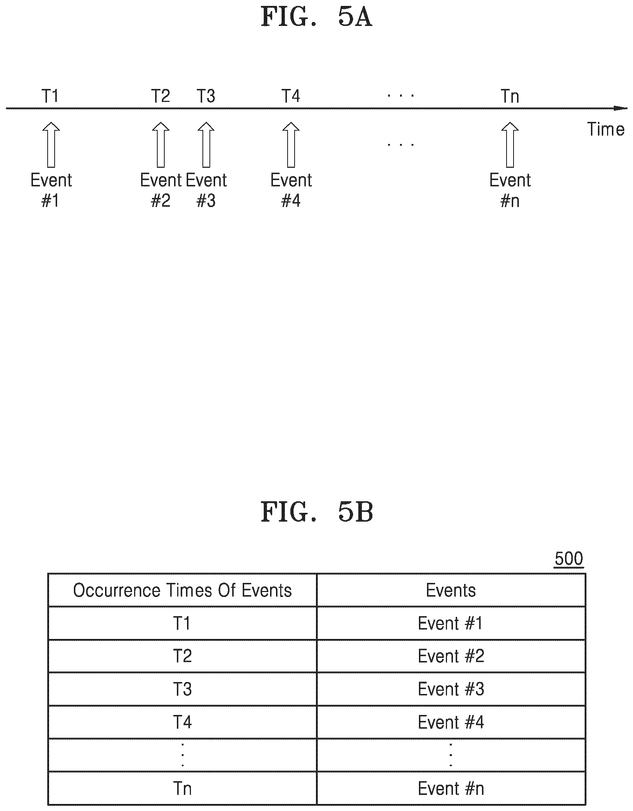

FIG. 5A is a diagram for describing an example of an operation of the computational storage system 200. FIG. 5B illustrates an example of an event table of the computational storage system 200.

In detail, FIG. 5A is a diagram for explaining an operation of generating an event table 500 by the computing device 220 of the computational storage system 200, and FIG. 5B illustrates an example of the event table 500 generated by the computing device 220 in FIG. 5A.

Referring to FIG. 5A, with respect to a plurality of events (e.g., movement of an object (or a position coordinates change of the object), an operation change, a weather change (an illumination change, a weather change, and a precipitation change), an operation of a new object, a color/tone change of the object, etc.) that occurred in base data included in at least one region/section of the original video data, a timeline of each event in order of occurrence time is illustrated. For example, the first event #1 may occur at a first time T1, the second event #2 may occur at a second time T2, a third event #3 may occur at a third time T3, a fourth event may occur at a fourth time T4, ..., an nth event #n may occur at an nth time Tn.

Referring to FIGS. 5A and 5B, the computing device 220 may generate the event table 500 by mapping each of the plurality of events and the occurrence time thereof. For example, the computing device 220 may generate the event table 500 by mapping the first event #1 and the first time T1 which is the occurrence time of the first event #1, mapping the second event #2 and the second time T2 which is the occurrence time of the second event #2, mapping the third event #3 and the third time T3 which is the occurrence time of the third event #3, mapping the fourth event #4 and the fourth time T4 which is the occurrence time of the fourth event #4, ..., mapping the nth event #n and the nth time Tn which is the occurrence time of the nth event #n.

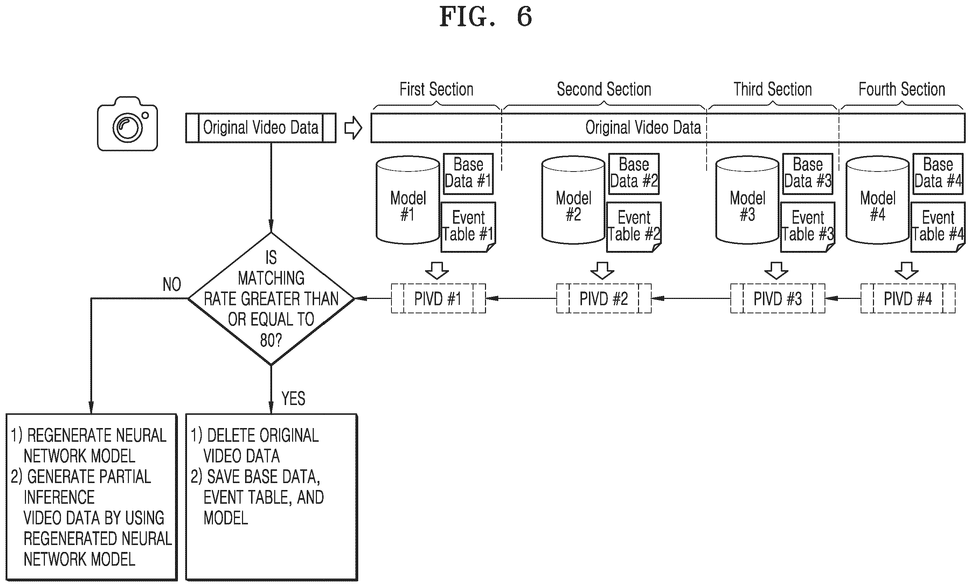

FIG. 6 is a diagram for describing an example of an operation of the computational storage system 200.

In detail, FIG. 6 is a diagram illustrating an operation of the computing device 220 of the computational storage system 200 dividing the original video data into at least one section to generate at least one neural network model and an operation of comparing a matching rate between inference video data generated from the at least one neural network model and the original video data.

Referring to FIG. 6, in some implementations, the computing device 220 of the computational storage system 200 may receive the original video data captured by using an imaging device (e.g., a camera) from an external device (e.g., the host device 100).

In some implementations, the computing device 220 may divide the original video data into at least one section (or at least one region) based on whether a data size of an event table increases to more than a first threshold (e.g., 200 %). For example, the computing device 220 may divide the original video data into first to fourth sections based on whether the data size of the event table in the original video data increases to more than the first threshold (e.g., 200 %).

In some implementations, the computing device 220 may generate a neural network model for each section based on base data and an event table corresponding to each of the sections. For example, the computing device 220 may generate the first neural network model #1 corresponding to the first section based on the first base data #1 and the first event table #1 of the first section. For example, the computing device 220 may generate the second neural network model #2 corresponding to the second section based on the second base data #2 and the second event table #2 of the second section. For example, the computing device 220 may generate the third neural network model #3 corresponding to the third section based on the third base data #3 and the third event table #3 of the third section. For example, the computing device 220 may generate the fourth neural network model #4 corresponding to the fourth section based on the fourth base data #4 and the fourth event table #4 of the fourth section.

In some implementations, the computing device 220 may generate inference video data for each section by using a neural network model corresponding to each of the sections. For example, the computing device 220 may generate the first PIVD #1 corresponding to the first section based on the first base data #1 and the first event table #1 by using the first neural network model #1. For example, the computing device 220 may generate the second PIVD #2 corresponding to the second section based on the second base data #2 and the second event table #2 of the second section by using the second neural network model #2. For example, the computing device 220 may generate the third PIVD #3 corresponding to the third section based on the third base data #3 and the third event table #3 of the third section by using the third neural network model #3. For example, the computing device 220 may generate the fourth PIVD #4 corresponding to the fourth section based on the fourth base data #4 and the fourth event table #4 of the fourth section by using the fourth neural network model #4.

In some implementations, the computing device 220 may calculate a matching rate between the original video data and each PIVD, and identify whether the matching rate is greater than or equal to a second threshold (e.g., 80 %). Here, the matching rate may indicate a matching degree of video between the original video data and each PIVD based on features of video data (e.g., a change of an object, concentration and color changes of the object, etc.).

In some implementations, the computing device 220 may delete the original video data when the matching rate is greater than or equal to the second threshold (e.g., 80 %) and store base data, an event table, and a neural network model of the corresponding section in the storage device 210 in place of the original video data.

In some implementations, when the matching rate is less than the second threshold (e.g., 80 %), the computing device 220 may regenerate the neural network model of the corresponding section. For example, the computing device 220 may regenerate the neural network model by resetting a section of the original video data (i.e., by changing the base data and the event table). The computing device 220 may generate PIVD by using the regenerated neural network model.

As described above, the computational storage system 200 (or the computing device 220) may calculate a matching rate indicating a matching degree between the original video data and the inference video data, and, when the matching rate is less than a threshold (e.g., the second threshold), regenerate the neural network model (i.e., retrain the neural network model) based on the base data and the event table.

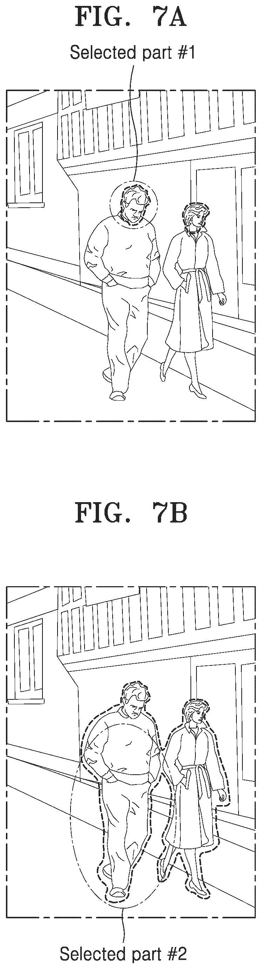

FIG. 7A is a diagram for describing an example of an operation of the computational storage system 200. FIG. 7B is a diagram for describing an example of an operation of the computational storage system 200.

Referring to FIGS. 7A and 7B, the computing device 220 of the computational storage system 200 may store base data, an event table, and a neural network model with respect to a selected part in the original video data according to a user selection or setting, and store the remaining unselected parts as the original video data.

Referring to FIG. 7A, the computing device 220 may store a human face part Selected part #1 of the original video data as base data, an event table, and a neural network model according to a user selection or setting, and store the remaining unselected parts as the original video data.

Referring to FIG. 7B, the computing device 220 may store a human body part Selected part #2 of the original video data as base data, an event table, and a neural network model according to a user selection or setting, and store the remaining unselected parts as the original video data.

As described above, the computational storage system 200 (or the computing device 220) may store only a selected part of the original video data as base data, an event table, and a neural network model according to a user selection or setting.

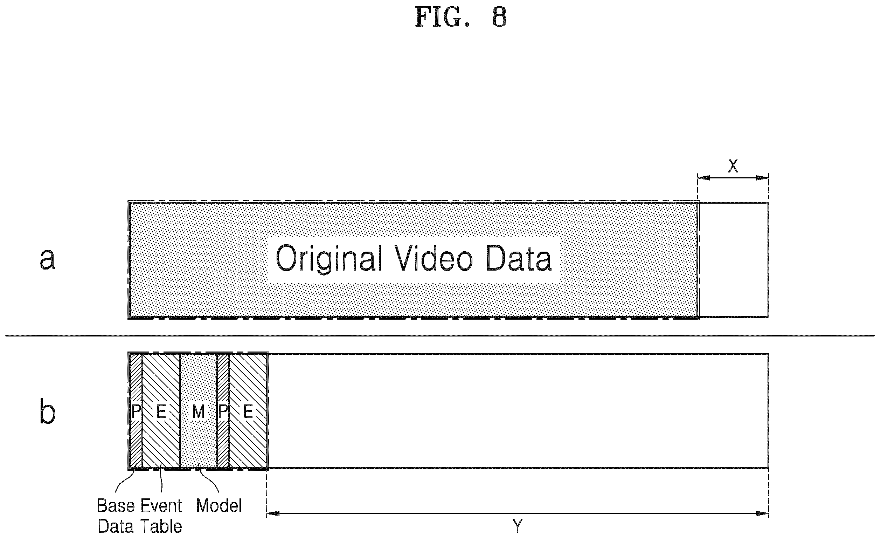

FIG. 8 illustrates an example of the effect of storage space management of the computational storage system 200.

In detail, FIG. 8 is a diagram for comparing and explaining the effect of storage space management between a storage device (a) that stores/keeps original video data itself according to a comparative implementation and a storage device (b) that stores/keeps base data, an event table, and a neural network model.

Referring to FIG. 8, it may be seen that the storage device (a) according to the comparative implementation stores the original video data (high capacity) having a large data size, and the remaining space is 'X(X<Y)', whereas the storage device (b) according to some implementations stores the base data, the event table, and the neural network model which have the small data size, and the remaining space is 'Y(X<Y)'.

Thus, the device and method may store the base data, the event table, and the neural network model which have the small data size, thereby maximizing the efficiency of storage space management in a storage device (or the computational storage system 200).

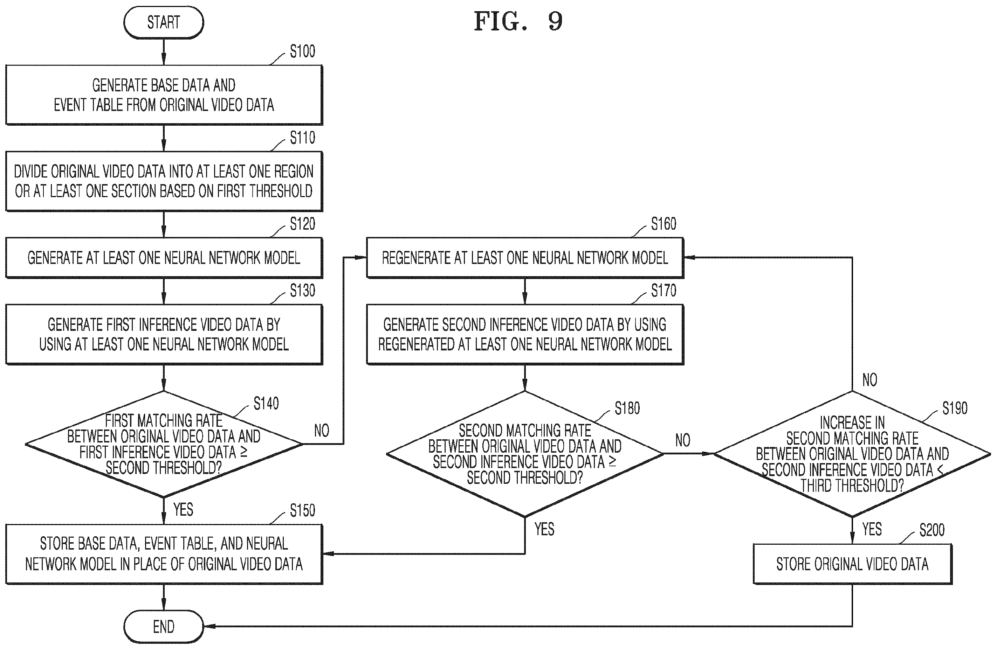

FIG. 9 is a flowchart illustrating an example of an operating method of the computational storage system 200.

Referring to FIG. 9, a method, performed by the computational storage system 200, of generating inference video data by using a neural network model generated/trained based on base data and an event table may include operations S100 to S200. Redundant descriptions of FIG. 9 with those of FIGS. 1 to 8 will be replaced with the descriptions of FIGS. 1 to 8.

In operation S100, the computational storage system 200 may generate the base data and the event table from the original video data. Here, the base data, which is data that is the basis when the neural network model generates inference video data, may mean base raw data (e.g., base video data of an object (1 picture)) of at least one object included in the original video data. The event table may refer to data obtained by respectively mapping events that occurred in the base data (e.g., movement of an object (or a position coordinates change of the object), an operation change, a weather change (an illumination change, a weather change, and a precipitation change), an operation of a new object, a color/tone change of the object, etc.) and occurrence times of the events.

In operation S110, the computational storage system 200 may divide the original video data into at least one region or at least one section based on a first threshold. In operation S120, the computational storage system 200 may generate at least one neural network model. Herein, the meaning of generating a neural network model based on base data and an event table may mean training a neural network model based on the base data and the event table.

In some implementations, the computational storage system 200 may divide the original video data into at least one region based on whether a data size of the event table increases to more than a first threshold (e.g., 200 %). The computational storage system 200 may generate the at least one neural network model corresponding to the at least one region. For example, when the at least one region includes a first region and a second region, the computational storage system 200 may generate a first neural network model corresponding to the first region based on the base data and the event table of the first region, and a second neural network model corresponding to the second region based on the base data and the event table of the second region. For example, the computational storage system 200 may generate the first neural network model trained to infer the original video data of the first region and a second neural network model trained to infer the original video data of the second region (see FIGS. 3A and 3B).

In some implementations, the computational storage system 200 may divide the original video data into at least one section based on whether a data size of the event table increases to more than a first threshold (e.g., 200 %). The computational storage system 200 may generate at least one neural network model corresponding to the at least one section. For example, when the at least one section includes a first section (e.g., a straight driving section) and a second section (e.g., a corner driving section), the computational storage system 200 may generate a third neural network model corresponding to the first section based on the base data and the event table of the first section, and a fourth neural network model corresponding to the second section based on the base data and the event table of the second section. For example, the computational storage system 200 may generate the third neural network model trained to infer the original video data of the first section and the fourth neural network model trained to infer the original video data of the second section (see FIG. 4).

In operation S130, the computational storage system 200 may generate first inference video data by using at least one neural network model.

In some implementations, the computational storage system 200 may generate inference video data of a corresponding region based on base data and an event table of at least one region by using at least one neural network model. For example, when the at least one region includes the first region and the second region, the computational storage system 200 may generate the first inference video data corresponding to the original video data of the first region based on the base data and the event table of the first region by using the first neural network model, and generate second inference video data corresponding to the original video data of the second region based on the base data and the event table of the second region by using the second neural network model (see FIGS. 3A and 3B).

In some implementations, the computational storage system 200 may generate inference video data of a corresponding region based on base data and an event table of at least one section by using at least one neural network model. For example, when the at least one section includes the first section (e.g., the straight driving section) or the second section (e.g., the corner driving section), the computational storage system 200 may generate third inference video data corresponding to the original video data of the first section based on the base data and the event table of the first section by using the third neural network model, and generate fourth inference video data corresponding to the original video data of the second section based on the base data and the event table of the second section by using the fourth neural network model (see FIG. 4).

In operation S140, the computational storage system 200 may identify whether a first matching rate between the original video data and the first inference video data is greater than or equal to a second threshold (e.g., 80 %). In some implementations, the computational storage system 200 may perform operation S150 when the first matching rate between the original video data and the first inference video data is greater than or equal to the second threshold (e.g., 80 %), and may perform operation S160 when the matching rate between the original video data and the first inference video data is less than the second threshold (e.g., 80 %). Here, the first matching rate may refer to a matching degree between the original video data and the first inference video data.

In operation S150, the computational storage system 200 may store the base data, the event table, and the neural network model in place of the original video data (assuming that the data size of the neural network model is smaller than the size of the original video data). For example, when the first matching rate between the original video data and the inference video data in the first region is greater than or equal to the second threshold (e.g., 80 %), the computational storage system 200 may delete the original video data in the first region and store the base data, the event table, and the first neural network model of the first region (used to generate the first inference video data).

In operation S160, the computational storage system 200 may regenerate at least one neural network model. For example, when the first matching rate between the original video data and the inference video data of the second region is less than the second threshold (e.g., 80 %), the computational storage system 200 may regenerate the second neural network model based on the base data and the event table of the second region. At this time, the computational storage system 200 may re-divide the at least one region (or the at least one section) to regenerate a neural network model corresponding to the at least one region (or the at least one section).

In operation S170, the computational storage system 200 may generate the second inference video data by using the regenerated at least one neural network model. For example, when the first matching rate between the original video data and the inference video data of the second region is less than the second threshold (e.g., 80 %), the computational storage system 200 may regenerate the second inference video data of the second region based on the base data and the event table of the second region by using the regenerated second neural network model.

In operation S180, the computational storage system 200 may identify whether a second matching rate between the original video data and the second inference video data is greater than or equal to a second threshold (e.g., 80 %). In some implementations, the computational storage system 200 may perform operation S150 when the second matching rate between the original video data and the second inference video data is greater than or equal to the second threshold (e.g., 80 %), and may perform operation S190 when the second matching rate between the original video data and the second inference video data is less than the second threshold (e.g., 80 %). Here, the second matching rate may refer to a matching degree between the original video data and the second inference video data.

In operation S190, the computational storage system 200 may identify whether an increase in the second matching rate between the original video data and the second inference video data is less than a third threshold (e.g., 2 %). In some implementations, the computational storage system 200 may perform operation S200 when the second matching rate between the original video data and the second inference video data increases to less than the third threshold (e.g., 2 %), and may perform operation S160 when the second matching rate between the original video data and the second inference video data increases to more than the third threshold (e.g., 2 %).

In operation S200, the computational storage system 200 may store the original video data. For example, when the increase in the second matching rate between the original video data and the second inference video data is less than the third threshold (e.g., 2 %) which is that the original video data may not be inferred by using a neural network model, and a sudden external event (e.g., an irregular event (e.g., a car accident, etc.) may occur. In this case, the computational storage system 200 may delete the base data, the event tables, and the neural network models (used to generate the inference video data) and store the original video data of the corresponding region or the corresponding section.

As described with reference to FIG. 2, some operations (e.g., operations S100 to S120) of the computational storage system 200 may be implemented as operations of the host device 100.

As described above, the computational storage system 200 may determine whether to store the base data, the event table, and the neural network model according to the matching rate between the original video data and the inference video data in place of the original video data, and regenerate the neural network model according to the corresponding result, thereby improving the accuracy of the inference video data.

In addition, when a sudden external event (i.e., irregular event) occurs, the computational storage system 200 may store the sudden external event (instead of storing the base data, the event tables, and the neural network models) as the original video data.

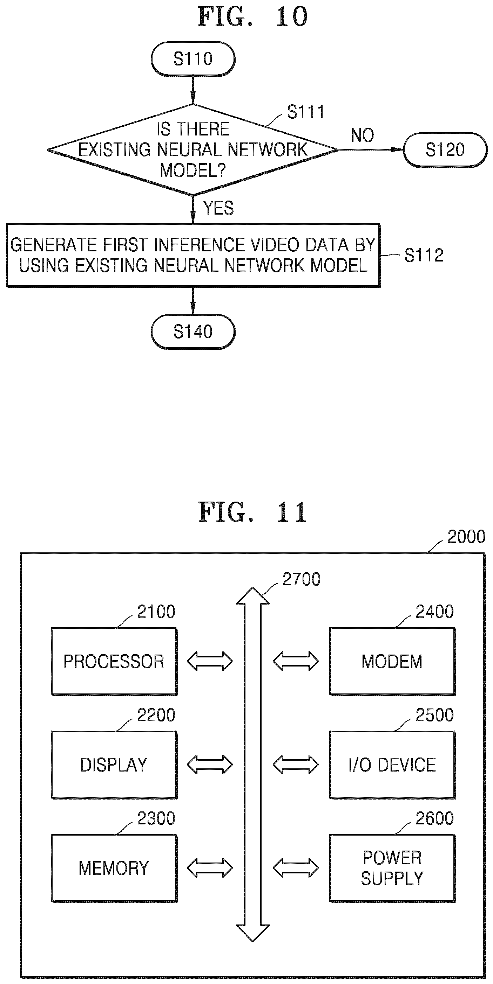

FIG. 10 is a flowchart illustrating an example of an operating method of the computational storage system 200.

In detail, FIG. 10 is a diagram for describing subsequent operations (e.g., operations S111 and S112) of operation S110 of FIG. 9.

In operation S111, the computational storage system 200 may identify whether there is an existing neural network model corresponding to at least one region (or at least one section). In some implementations, the computational storage system 200 may perform operation S112 when there is the existing neural network model corresponding to the at least one region (or the at least one section), and perform operation S120 when there is no existing neural network model corresponding to the at least one region (or the at least one section).

In operation S112, when there is the existing neural network model corresponding to the at least one region (or the at least one section), the computational storage system 200 may generate first inference video data by using the existing neural network model. For example, when the at least one region includes a first region and a second region, and there is an existing neural network model corresponding to the second region, the computational storage system 200 may generate a first neural network model corresponding to the first region based on base data and an event table of the first region and use the existing neural network model without generating a separate neural network model corresponding to the second region.

As described above, when there is the existing neural network model corresponding to the at least one region (or the at least one section) in the computational storage system 200, the existing neural network model may be recycled and used, thereby preventing unnecessary data processing and overload occurrence.

FIG. 11 is a block diagram illustrating an example of an electronic device 2000.

Referring to FIG. 11, the electronic device 2000 may include a processor 2100, a display 2200, a memory 2300, a modem 2400, an input/output device 2500, and a power supply 2600.

The processor 2100 is a device that controls an overall operation of the electronic device 2000. The processor 2100 may perform data processing on input data by driving an application. The application may include a plurality of data computations related to performing a task, for example, an arithmetic computation, a convolution computation, a polling computation, etc. For example, when the processor 2100 performs a neural network-based task (e.g., generating inference video data corresponding to the original video data), the application may include a plurality of data computations, and input and output sizes, weights, and biases of the plurality of data computations, based on at least one of various types of neural networks. For example, the neural network model may be a deep-fake model as a generative model.

The processor 2100 may be implemented as a CPU, a GPU, a DSP, a FPGA, an ASIC, an NPU, etc. However, the processor 2100 is not limited thereto, and may be implemented as a variety of types of acceleration circuits (accelerators) that perform in parallel data processing required to perform an allocated task, for example, data computations.

The processor 2100 may divide the original video data into at least one region (or at least one section) according to a predetermined criterion (e.g., whether a size of an event table increases to more than a first threshold (e.g., 200 %), and generate a neural network model corresponding to the at least one region or the at least one section.

The processor 2100 may generate inference video data of the corresponding region (or the corresponding section) based on base data and an event table of the corresponding region (or the corresponding section) by using the generated neural network model. Here, the inference video data may mean data generated by inferring the original video data of the corresponding region (or the corresponding section).

The processor 2100 may determine whether to store the base data, the event table, and the neural network model in place of the original video data based on a matching rate between the original video data and the inference video data.

When the matching rate between the original video data and the inference video data is less than the predetermined threshold, the processor 2100 may regenerate the neural network model with respect to the base data and the event table of the corresponding region (or the corresponding section), and regenerate the inference video data of the corresponding region (or the corresponding section) by using the regenerated neural network model.

The display 2200 may output a data processing result of the processor 2100 to a user through a display panel.

The memory 2300 may include a volatile memory such as an SRAM, a DRAM, a synchronous RAM (SDRAM), and/or a nonvolatile memory such as a PRAM, an MRAM, an ReRAM, an FRAM, etc.

The memory 2300 may include a plurality of storage devices, and each of the plurality of storage devices may be implemented as the computational storage system 200 described above with reference to FIGS. 1 to 10. In addition, the memory 2300 may be connected to the processor 2100, the display 2200, the modem 2400, the input/output device 2500, and the power supply 2600 through a channel 2700, and the channel 2700 may be used for data exchange between the memory 2300 and the processor 2100, the display 2200, the modem 2400, the input/output device 2500, and the power supply 2600.

The modem 2400 may support at least one of various wireless/wireless communication protocols to communicate with an external device or an external system of the electronic device 2000. The input/output device 2500 may mediate communication between the user and the electronic device 2000 through a user interface including various input/output interfaces. The power supply 2600 may perform power supply and overall management related to power of the electronic device 2000.

When the electronic device 2000 according to the present disclosure as described above is used, the processor 2100 may generate a neural network model for each region (or for each section), generate inference video data for each region (or for each section) by using the neural network model for each region (or for each section), and store base data, an event table, and a neural network model (low capacity) in place of the original video data (high capacity), thereby maximizing the efficiency of the storage space of the memory 2300.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

## Claims

1. A computational storage system (200) comprising:
a storage device (210) configured to store at least one neural network model, base data corresponding to the at least one neural network model, and an event table (500); and
a computing device (220) configured to generate first inference multimedia data corresponding to original multimedia data based on the base data, the event table (500), and the at least one neural network model,
wherein the base data includes base raw data of at least one object included in the original multimedia data, and
wherein the event table (500) includes data obtained based on respectively mapping a plurality of events occurred in the base data and a plurality of occurrence times of the plurality of events.

2. The computational storage system (200) of claim 1, wherein the computing device (220) is configured to
divide the original multimedia data into at least one region based on whether a data size of the event table (500) increases to more than a first threshold, and
generate the at least one neural network model corresponding to the at least one region.

3. The computational storage system (200) of claim 1, wherein the computing device (220) is configured to
divide the original multimedia data into at least one section based on whether a data size of the event table (500) increases to more than a first threshold, and
generate the at least one neural network model corresponding to the at least one section.

4. The computational storage system (200) of any one of claims 1 to 3, wherein the computing device (220) is configured to
identify whether a first matching rate is greater than or equal to a second threshold, the first matching rate being calculated based on comparing the original multimedia data with the first inference multimedia data, and
based on the first matching rate being greater than or equal to the second threshold, delete the original multimedia data, and store, in the storage device (210), the at least one neural network model, the base data, and the event table (500) used to generate the first inference multimedia data.

5. The computational storage system (200) of claim 4, wherein the computing device (220) is configured to
based on the first matching rate being less than the second threshold, regenerate the at least one neural network model based on the base data and the event table (500), and
generate second inference multimedia data based on the base data, the event table (500), and the regenerated at least one neural network model.

6. The computational storage system (200) of claim 5, wherein the computing device (220) is configured to
identify whether a second matching rate is greater than or equal to the second threshold, the second matching rate being calculated based on comparing the original multimedia data with the second inference multimedia data, and
based on the second matching rate being greater than or equal to the second threshold, delete the original multimedia data, and store, in the storage device (210), the at least one neural network model, the base data, and the event table (500) used to generate the second inference multimedia data.

7. The computational storage system (200) of claim 6, wherein the computing device (220) is configured to
based on the second matching rate being less than the second threshold, identify whether an increase in the second matching rate is less than a third threshold, and
based on the increase in the second matching rate being less than the third threshold, delete the at least one neural network model, the base data, and the event table (500) used to generate the second inference multimedia data, and store the original multimedia data in the storage device (210).

8. An operating method of a computational storage system (200), the operating method comprising:
generating (S100), from original multimedia data, base data and an event table (500);
generating (S110, S120) at least one neural network model based on the base data and the event table (500); and
generating (S130) first inference multimedia data corresponding to the original multimedia data based on the base data, the event table (500), and the at least one neural network model,
wherein the base data includes base raw data of at least one object included in the original multimedia data, and
wherein the event table (500) includes data obtained based on respectively mapping a plurality of events occurred in the base data and a plurality of occurrence times of the plurality of events.

9. The operating method of claim 8, wherein generating (S110, S120) the at least one neural network model includes
dividing (S110) the original multimedia data into at least one region based on whether a data size of the event table (500) increases to more than a first threshold, and
generating (S120) the at least one neural network model corresponding to the at least one region.

10. The operating method of claim 8, wherein generating (S110, S120) the at least one neural network model includes
dividing (S110) the original multimedia data into at least one section based on whether a data size of the event table (500) increases to more than a first threshold, and
generating (S120) the at least one neural network model corresponding to the at least one section.

11. The operating method of any one of claims 8 to 10, comprising:
identifying (S140) whether a first matching rate is greater than or equal to a second threshold, the first matching rate being calculated based on comparing the original multimedia data with the first inference multimedia data, and
based on the first matching rate being greater than or equal to the second threshold, deleting (S150) the original multimedia data, and storing, in a storage device (210), the at least one neural network model, the base data, and the event table (500) used to generate the first inference multimedia data.

12. The operating method of claim 11, comprising:
based on the first matching rate being less than the second threshold, regenerating the at least one neural network model based on the base data and the event table (500), and
generating (S170) second inference multimedia data based on the base data, the event table (500), and the regenerated at least one neural network model.

13. The operating method of claim 12, comprising:
identifying (S180) whether a second matching rate is greater than or equal to the second threshold, the second matching rate being calculated by comparing the original multimedia data with the second inference multimedia data, and
based on the second matching rate being greater than or equal to the second threshold, deleting (S150) the original multimedia data, and storing, in the storage device (210), the at least one neural network model, the base data, and the event table (500) used to generate the second inference multimedia data.

14. The operating method of claim 13, comprising:
based on the second matching rate being less than the second threshold, identifying (S190) whether an increase in the second matching rate is less than a third threshold, and
based on the increase in the second matching rate being less than the third threshold, deleting the at least one neural network model, the base data, and the event table (500) used to generate the second inference multimedia data, and storing (S200) the original multimedia data in the storage device (210).

15. An electronic device (2000) comprising:
a memory (2300); and
a processor (2100) configured to perform the method according to any one of claims 8 to 14, wherein the first inference multimedia data infers the original multimedia data based on the at least one neural network model.
